# EUROPEAN PATENT SPECIFICATION

(11) **EP 4 016 965 B1**
(45) Date of publication and mention of the grant of the patent: **21.05.2025**
(21) Application number: 21860445.2
(22) Date of filing: 25.08.2021
(51) Int. Cl.: H04L 45/00, H04L 45/02, H04L 45/50, H04L 45/52

(54) **INFORMATION PROCESSING METHOD, NETWORK CONTROLLER, NODE AND COMPUTER-READABLE STORAGE MEDIUM**
INFORMATIONSVERARBEITUNGSVERFAHREN, NETZWERKSTEUERUNG, KNOTEN UND COMPUTERLESBARES SPEICHERMEDIUM
PROCÉDÉ DE TRAITEMENT D'INFORMATIONS, DISPOSITIF DE COMMANDE DE RÉSEAU, NOEUD ET SUPPORT DE STOCKAGE LISIBLE PAR ORDINATEUR

(30) Priority: 25.08.2020 CN 202010862297
(43) Date of publication of application: 22.06.2022
(73) Proprietor: ZTE Corporation, Shenzhen, Guangdong 518057 (CN)
(72) Inventor: LI, Qingning, Shenzhen, Guangdong 518057 (CN); PENG, Shaofu, Shenzhen, Guangdong 518057 (CN)
(74) Representative: Zoli, Filippo
(86) International application number: PCT/CN2021/114566
(87) International publication number: WO 2022/042610

(56) References cited:
- WO-A1-2020/160564
- CN-A- 106 713 137
- CN-A- 110 830 352
- CN-A- 111 541 613
- US-A1- 2019 182 124
- US-A1- 2020 127 913
- US-B1- 9 660 897

## Description

### TECHNICAL FIELD

Embodiments of the present disclosure relate to, but not limited to, the technical field of communication, and in particular to an information processing method applicable to a network controller, an information processing method applicable to a first edge node, a network controller, a node and a computer-readable storage medium.

### BACKGROUND

Segment routing (SR) is a method for routing based on a source node. This method can compel a flow to pass through any path and service link only by maintaining the state of each flow on the source node, without maintaining the state of flows on intermediate nodes and the last node. Segment routing can be applied to multi-protocol label switching (MPLS) data planes and IPv6 data planes, which are called SR-MPLS and SRv6, respectively.

In some cases, SRv6 can be communicated with SR-MPLS or conventional MPLS by advertising public network routing or virtual private network (VPN) private network routing through border gateway protocol (BGP). However, in a case where metropolitan area networks at two ends and the intermediate backbone network are different network domains and the network controller has no permission to acquire the topology information in the backbone domain, for example, in a case where the metropolitan area networks at two end are networks supporting SRv6, the backbone network is a conventional MPLS network and the network controller has no permission to acquire the topology information of the conventional MPLS network in the backbone domain, the network controller cannot calculate the end-to-end routing path of cross-metropolitan area-backbone-metropolitan area.

Patent literature (US2020127913A1) is directed to packet network interworking including segment routing. In one embodiment, a network includes a first forwarding domain using a first data plane forwarding protocol and a second forwarding domain using a second data plane forwarding protocol different than the first data forwarding plane forwarding protocol. The first forwarding domain includes a first path node and a particular border node. The second forwarding domain includes a second path node and the particular border node. The particular border node performs Segment Routing or other protocol interworking between the different data plane forwarding domains, such as for transporting packets through a different forwarding domain or translating a packet to use a different data forwarding protocol. These forwarding domains typically include Segment Routing (SR) and SR-Multiprotocol Label Switching (SR-MPLS). Paths through the network are determined by a Path Computation Engine and/or based on route advertisements such associated with Binding Segment Identifiers (BSIDs) (e.g., labels, Internet Protocol version 6 addresses).

Patent literature (US9660897B1) discloses mechanisms by which link state "path" information can be collected from networks and shared with external components, such as routers or centralized controllers or path computation elements, using an exterior gateway protocol, such as the Border Gateway Protocol. That is, the link state information for multiple interior gateway protocol (IGP) routing domains is shared between external components using the exterior gateway protocol, such as BGP. As such, the techniques described herein allow link state information to be shared across different routing domains, such as routing and reachability information shared between different autonomous systems. The extensions described herein allow an exterior gateway protocol to be used to signal explicit path segments within IPG routing domains so as to set up an overall path that spans the multiple IPG routing domains.

While the above publications may achieve their intended purposes, there is still a need for a new and improved information processing method.

### SUMMARY

The summary of the subject detailed herein will be given below. The summary is not intended to limit the protection scope of the claims.

Embodiments of the present disclosure provide an information processing method, a network controller, a node and a computer-readable storage medium.

According to an embodiment of the present disclosure, provided is an information processing method, applied to a network controller. The method includes: acquiring a first border gateway protocol link state (BGP-LS) message reported by a first edge node of a first network domain, where the first BGP-LS message carries second segment identifier information and first segment identifier information pre-configured according to the second segment identifier information, the first segment identifier information corresponds to the first edge node, and the second segment identifier information corresponds to a second edge node of the first network domain; where, the first segment identifier information pre-configured for the second segment identifier information is by means of a mapping relationship between the first segment identifier information and the second segment identifier information; determining, according to the first segment identifier information and the second segment identifier information, the presence of a reachable path from the first edge node to the second edge node; and, calculating a routing path including the reachable path, and establishing a segment identifier list including the first segment identifier information in the process of calculating the routing path; where the first BGP-LS message further carries Forwarding Equivalence Class, FEC, information; and, the determining, according to the first segment identifier information and the second segment identifier information, the presence of a reachable path from the first edge node to the second edge node includes: determining, according to the first segment identifier information, the second segment identifier information and the FEC information, the presence of a reachable path from the first edge node to the second edge node; where, the FEC, information includes loopback routing information of an exit node of MPLS label switching path or global IPv6 routing information of another exit node of SRv6 domain.

According to another embodiment of the present disclosure, further provided is an information processing method, applied to a first edge node of a first network domain. The method includes: constructing a first BGP-LS message carrying first segment identifier information and second segment identifier information, where the second segment identifier information comes from a second edge node of the first network domain and corresponds to the second edge node, the first segment identifier information is pre-configured according to the second segment identifier information and corresponds to the first edge node; where, the first segment identifier information pre-configured for the second segment identifier information is by means of a mapping relationship between the first segment identifier information and the second segment identifier information; and, reporting the first BGP-LS message to a network controller, so that the network controller determines, according to the first segment identifier information and the second segment identifier information in the first BGP-LS message, the presence of a reachable path from the first edge node to the second edge node and calculates a routing path including the reachable path and the network controller establishes a segment identifier list including the first segment identifier information in the process of calculating the routing path; where the first BGP-LS message further carries FEC information, and the first BGP-LS message allows the network controller to determine, according to the first segment identifier information, the second segment identifier information and the FEC information in the first BGP-LS message, the presence of a reachable path from the first edge node to the second edge node and calculate a routing path including the reachable path, and to establish a segment identifier list including the first segment identifier information in the process of calculating the routing path; where, the FEC, information includes loopback routing information of an exit node of MPLS label switching path or global IPv6 routing information of another exit node of SRv6 domain.

According to yet another embodiment of the present disclosure, further provided is a network controller. The network controller includes: a memory, a processor and computer programs that are stored on the memory and executable by the processor. The programs, when executed by the processor, cause the processor to carry out the information processing method described above.

According to yet another embodiment of the present disclosure, further provided is an edge node. The node includes: a memory, a processor and computer programs that are stored on the memory and executable by the processor. The programs, when executed by the processor, cause the processor to carry out the information processing method described above.

According to yet another embodiment of the present disclosure, further provided is a computer-readable storage having computer-executable instructions stored thereon which, when executed by a processor, cause the processor to carry out the method described above.

Other features and advantages of the present disclosure will be explained in the following description, and will partially become apparent from the description or be appreciated by implementing the present disclosure. The objectives and other advantages of the present disclosure can be realized and obtained by the structures specified in the description, the claims and the accompanying drawings.

### BRIEF DESCRIPTION OF DRAWINGS

The accompanying drawings are provided for further understanding of the technical schemes of the present disclosure and constitute a part of this description. The accompanying drawings, together with the embodiments of the present disclosure, are intended to illustrate the technical schemes of the present disclosure, rather than limit the technical schemes of the present disclosure.
FIG. 1 is a schematic diagram of a network topology configured to execute an information processing method according to an embodiment of the present disclosure;
FIG. 2 is a schematic diagram of a network topology configured to execute an information processing method according to another embodiment of the present disclosure;
FIG. 3 is a flowchart of an information processing method applied to a network controller according to an embodiment of the present disclosure;
FIG. 4 is a schematic diagram of a sub-TLV structure carrying first segment identifier information according to an embodiment of the present disclosure;
FIG. 5 is a schematic diagram of a sub-TLV structure carrying second segment identifier information according to another embodiment of the present disclosure;
FIG. 6 is a schematic flowchart of calculating a routing path in the information processing method according to another embodiment of the present disclosure;
FIG. 7 is a schematic flowchart of an information processing method applied to a first edge node according to another embodiment of the present disclosure;
FIG. 8 is a schematic flowchart of an information processing method applied to a first edge node according to another embodiment of the present disclosure;
FIG. 9 is a schematic flowchart of an information processing method applied to a first edge node according to another embodiment of the present disclosure; and
FIG. 10 is a schematic flowchart of forwarding a message according to the first segment identifier information in a segment identifier list in the information processing method according to another embodiment of the present disclosure.

### DETAILED DESCRIPTION

To make the objectives, technical schemes and advantages of the present disclosure clearer, the present disclosure will be further described in detail below by embodiments with reference to the accompanying drawings. It should be understood that the embodiments to be described herein are merely used for illustrating, rather than limiting the present disclosure.

It is to be noted, although the functional modules have been divided in the schematic diagrams of apparatuses and the logical orders have been shown in the flowcharts, in some cases, the division of modules in the apparatuses may be performed in a different manner than shown herein, or the steps shown or described may be executed in an order different from the order in the flowcharts. It is to be noted that terms "first", "second" and the like in the description, the claims and the drawings are used for distinguishing similar objects, but not necessarily used for describing a specific sequence or a precedence order.

Embodiments of the present disclosure provide an information processing method, a network controller, a node and a computer-readable storage medium. The network controller acquires first segment identifier information and second segment identifier information through a first BGP-LS message reported by a first edge node of a first network domain. Since the first segment identifier information corresponds to the first edge node, the second segment identifier information corresponds to a second edge node of the first network domain, and the first segment identifier information is configured according to the second segment identifier information, the network controller can determine, according to the first segment identifier information and the second segment identifier information, the presence of a reachable path across the first network domain from the first edge node to the second edge node and thus can calculate a routing path including the reachable path. Therefore, even if the network controller has no permission to acquire topology information in the first network domain, the network controller can still calculate the routing path across the first network domain. In addition, the network controller will establish a segment identifier list including the first segment identifier information in the process of calculating the routing path. Therefore, after the network controller issues the segment identifier list including the first segment identifier information to a node, the node can forward a message according to the segment identifier list so that the message can be forwarded along the routing path across the first network domain.

The embodiments of the present disclosure will be further described below with reference to the accompanying drawings.

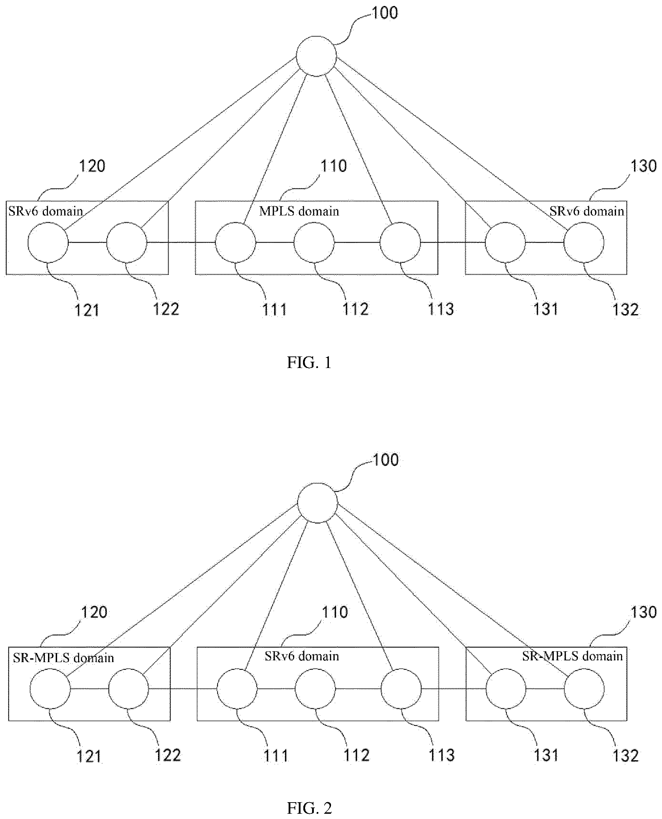

As shown in FIG. 1, FIG. 1 is a schematic diagram of a network topology configured to execute an information processing method according to an embodiment of the present disclosure. In an example of FIG. 1, the network topology includes a network controller 100, a first node 121, a second node 122, a third node 111, a fourth node 112, a fifth node 113, a sixth node 131 and a seventh node 132. The first node 121 and the second node 122 belong to a second network domain 120. The third node 111, the fourth node 112 and the fifth node 113 belong to a first network domain 110. The sixth node 131 and the seventh node 132 belong to a third network domain 130. The first node 121, the second node 122, the third node 111, the fourth node 112, the fifth node 113, the sixth node 131 and the seventh node 132 are connected successively. The first node 121, the second node 122, the third node 111, the fourth node 112, the fifth node 113, the sixth node 131 and the seventh node 132 can be network devices such as routers or switches, which can forward messages. The network controller 100 is connected to the first node 121, the second node 122, the third node 111, the fifth node 113, the sixth node 131 and the seventh node 132, respectively, and can acquire node information reported by these nodes respectively and calculate an end-to-end routing path according to the node information. In addition, the network controller 100 can also control these nodes, respectively.

In an embodiment, the second network domain 120 and the third network domain 130 belong to a metropolitan area network, and the first network domain 110 belongs to a backbone network. In addition, with reference to FIG. 1, the second network domain 120 and the third network domain 130 can be SRv6 domains, and the first network domain 110 is an MPLS domain. In another embodiment, with reference to FIG. 2, the second network domain 120 and the third network domain 130 can be MPLS domains, and the first network domain 110 is an SRv6 domain.

It is to be noted that both the third node 111 and the fifth node 113 are edge nodes of the first network domain 110, which have the ability to support SRv6 and can report related node information to the network controller 100. The second node 122 and the third node 111 are BGP peers, and the fifth node 113 and the sixth node 131 are BGP peers. A link segment identifier used for indicating the adjacency between the second node 122 and the third node 111 is stored in the second node 122, and a link segment identifier used for indicating the adjacency between the fifth node 113 and the sixth node 131 is stored in the sixth node 131. The second node 122 and the sixth node 131 can report the stored link segment identifiers to the network controller 100.

In addition, each node in the first network domain 110 can acquire node information of other nodes in the first network domain 110 and can thus establish a reachable path in the first network domain 110. For example, in FIG. 1, the third node 111 can establish a reachable path from the fourth node 112 to the fifth node 113. It is to be noted that, in a case where the network controller has no permission to acquire the topology information in the first network domain 110, the network controller cannot acquire the specific topology information of the reachable path through the third node 111.

The network topology and application scenario described in the embodiment of the present disclosure are to describe the technical schemes in the embodiment of the present disclosure more clearly, and do not constitute any limitations to the technical schemes in the embodiment of the present disclosure. As known to those having ordinary skills in the art, with the evolution of the network topology and the emergence of new application scenarios, the technical schemes in the embodiment of the present disclosure are also applicable to similar technical problems.

It should be understood by those having ordinary skills in the art that each node and topology structure shown in FIG. 1 do not constitute any limitations to the embodiments the present invention and more or less components than those shown or combinations of some components or different component arrangements can be included.

In the network topology shown in FIG. 1, the edge nodes of each network domain can separately call the stored information processing programs to execute the information processing method. In another embodiment, the network controller can call the stored information processing programs and cooperate with each node to execute the information processing method.

Based on the above network topology, the embodiments of the information processing method of the present disclosure are provided.

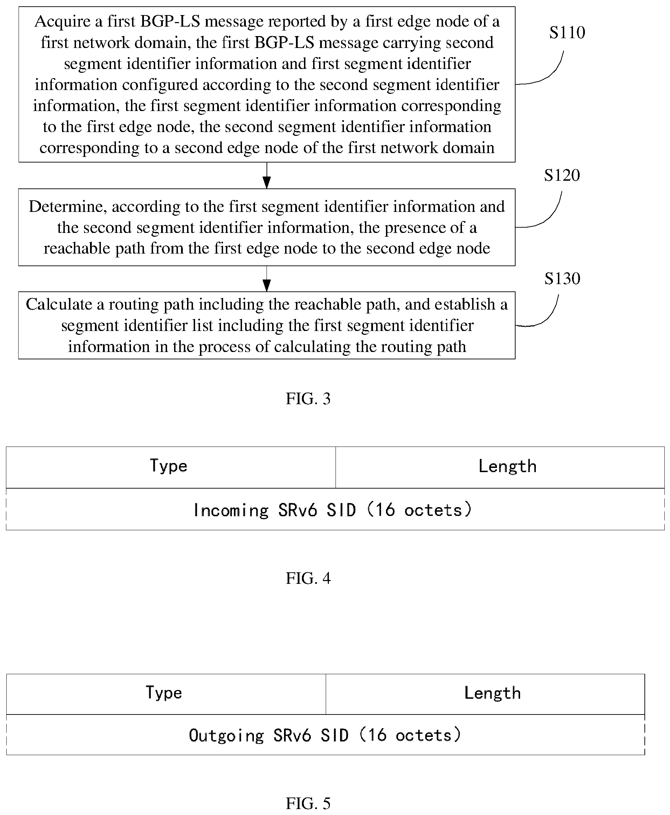

As shown in FIG. 3, FIG. 3 is a flowchart of an information processing method according to an embodiment of the present disclosure. The information processing method is applied to a network controller. The information processing method includes, but not limited to, steps S110 to S130.

At S110, a first BGP-LS message reported by a first edge node of a first network domain is acquired, where the first BGP-LS message carries second segment identifier information and first segment identifier information configured according to the second segment identifier information, the first segment identifier information corresponds to the first edge node, and the second segment identifier information corresponds to a second edge node of the first network domain.

At S120, the presence of a reachable path from the first edge node to the second edge node is determined according to the first segment identifier information and the second segment identifier information.

At S130, a routing path including the reachable path is calculated, and a segment identifier list including the first segment identifier information is established in the process of calculating the routing path.

In an embodiment, the second segment identifier information comes from the second edge node of the first network domain and corresponds to the second edge node. Therefore, after the first edge node of the first network domain acquires the second segment identifier information, the first edge node can pre-configure corresponding first segment identifier information for the second segment identifier information (that is, a mapping relationship exists between the first segment identifier information and the second segment identifier information). After the network controller receives the first segment identifier information and the second segment identifier information carried in the first BGP-LS message, since the first segment identifier information corresponds to the first edge node, the second segment identifier information corresponds to the second edge node and the first segment identifier information is configured according to the second segment identifier information, in a case where the network controller has no permission to acquire the topology information in the first network domain, the network controller can take the first network domain as a black box network that can learn entry node information and exit node information but cannot learn the specific internal topology, that is, the network controller can determine, according to the first segment identifier information and the second segment identifier information, the presence of a reachable path across the first network domain from the first edge node to the second edge node. Therefore, the network controller can calculate a routing path including the reachable path. Thus, even if the network controller has no permission to acquire the topology information in the first network domain, the network controller can still calculate a routing path across the first network domain. In addition, the network controller will establish a segment identifier list including the first segment identifier information in the process of calculating the routing path. Therefore, after the network controller issues the segment identifier list including the first segment identifier information to a node in a subsequent step, the node can forward a message according to the segment identifier list so that the message can be forwarded along the routing path across the first network domain.

In an embodiment, the first network domain can be an MPLS domain or an SRv6 domain. This will not be specifically limited in the embodiment. When the first network domain is an MPLS domain, the first segment identifier information is an SRv6 segment identifier, and the second segment identifier information is an MPLS label. When the first network domain is an SRv6 domain, the first segment identifier information is an MPLS label, and the second segment identifier information is an SRv6 segment identifier.

In an embodiment, a sub-TLV can be added in the first BGP-LS message, so that the first BGP-LS message can carry the first segment identifier information and the second segment identifier information.

The following description will be given by way of examples.

In an example, when the first network domain is an MPLS domain, an MPLS Cross Connect Incoming SRv6 SID sub-TLV may be added in the Local MPLS Cross Connect TLV of the existing BGP-LS message structure to carry the first segment identifier information (SRv6 segment identifier),. The Local MPLS Cross Connect TLV expands the carrying through an NLRI (network layer reachability information) field in the BGP-LS message structure, and the second segment identifier information (MPLS label) is carried in the Local MPLS Cross Connect TLV. With reference to FIG. 4, as an example, FIG. 4 shows a structure of MPLS Cross Connect Incoming SRv6 SID sub-TLV carrying the first segment identifier information. In this sub-TLV structure, main fields are explained below:
Type: it occupies 2 bytes and is used to indicate that the sub-TLV is MPLS Cross Connect Incoming SRv6 SID sub-TLV;
Length: it occupies 2 bytes and is used to indicate the length of the sub-TLV not containing the Type field and the Length field; and
Incoming SRv6 SID: it occupies 16 bytes and is used to indicate a specific value of the first segment identifier information. Specifically, the active segment identifier (Active SID) is an IPv6 message of the first segment identifier information represented by this field, and can be guided to be forwarded along the reachable path having a mapping relationship with the first segment identifier information.

After the network controller acquires the second segment identifier information in the Local MPLS Cross Connect TLV and the content (i.e., the first segment identifier information) of the Incoming SRv6 SID field in the MPLS Cross Connect Incoming SRv6 SID sub-TLV, the network controller can include the first segment identifier information (SRv6 segment identifier) represented by the Incoming SRv6 SID field in an end-to-end SRv6 segment identifier list across the first network domain. Thus, when the message forwarded along the SRv6 segment identifier list reaches an edge node corresponding to the first segment identifier information, the edge node can switch the first segment identifier information into the MPLS label (i.e., the second segment identifier information) pre-stored in the edge node, so that the edge node can forward this message in the first network domain according to the MPLS label.

In addition, in another example, when the first network domain is an SRv6 domain, an MPLS Cross Connect Outgoing SRv6 SID sub-TLV may be added in the Local MPLS Cross Connect TLV of the existing BGP-LS message structure. The Local MPLS Cross Connect TLV expands the carrying through an NLRI field in the BGP-LS message structure, and the Incoming Label field in the Local MPLS Cross Connect TLV carries the first segment identifier information (MPLS label), and the MPLS Cross Connect Outgoing SRv6 SID sub-TLV carries the second segment identifier information (SRv6 segment identifier). With reference to FIG. 5, as an example, FIG. 5 shows a structure of MPLS Cross Connect Outgoing SRv6 SID sub-TLV carrying the second segment identifier information. In this sub-TLV structure, main fields are explained below:
Type: it occupies 2 bytes and is used to indicate that the sub-TLV is MPLS Cross Connect Outgoing SRv6 SID sub-TLV;
Length: it occupies 2 bytes and is used to indicate the length of the sub-TLV not containing the Type field and the Length field;
Outgoing SRv6 SID: it occupies 16 bytes and is used to indicate a specific value of the second segment identifier information. Specifically, the top layer label is an MPLS label message of the first segment identifier information and can be guided to be forwarded along the reachable path utilizing the second segment identifier information represented by this field as exit address information.

After the network controller acquires the content (i.e., the first segment identifier information) of the Incoming Label field in the Local MPLS Cross Connect TLV and the content (i.e., the second segment identifier information) of the Outgoing SRv6 SID field in the MPLS Cross Connect Incoming SRv6 SID sub-TLV, the network controller can include the first segment identifier information (MPLS label) represented by the Incoming Label field in an end-to-end SR-MPLS segment identifier list across the first network domain. Thus, when the message forwarded along the SR-MPLS segment identifier list reaches an edge node corresponding to the first segment identifier information, the edge node can switch the first segment identifier information into the SRv6 segment identifier (i.e., the second segment identifier information) pre-stored in the edge node, so that the edge node can forward this message in the first network domain according to the SRv6 segment identifier.

In addition, in an embodiment, the first BGP-LS message further carries forwarding equivalence class (FEC) information. The FEC information is used to indicate related information of an exit node of the reachable path from the first edge node to the second edge node in the first network domain. In this case, the step S120 includes, without limitation, determining, according to the first segment identifier information, the second segment identifier information and the FEC information, the presence of a reachable path from the first edge node to the second edge node.

In an embodiment, the FEC information is the loopback routing information of the exit node of the MPLS label switching path (MPLS LSP) or the global IPv6 routing information of the exit node of the SRv6 domain. The network controller can complete a path puzzle during the calculation of the end-to-end cross-domain path by utilizing the FEC information. For example, in a case where the network controller cannot acquire the topology information in the first network domain and regard the first network domain as a black box network, when the network controller needs to calculate an end-to-end routing path across the first network domain, since the network controller has acquired the first BGP-LS message reported by the first edge node of the first network domain and the first BGP-LS message carries the first segment identifier information, the second segment identifier information and the FEC information, the network controller can learn the presence of a reachable path (e.g., an MPLS LSP or SRv6 forwarding path) from the first edge node to the second edge node in the first network domain through the first segment identifier information, the second segment identifier information and the FEC information. The specific information of the second edge node is indicated by the FEC information. Therefore, when an end-to-end routing path across the first network domain needs to be calculated, the network controller can establish a segment identifier list including the first segment identifier information, and it is considered that the first segment identifier information in the segment identifier list corresponds to a one-hop reachable path from the first edge node to the second edge node. Thus, the message can be passed through along the one-hop reachable path in the black box network (i.e., the first network domain) according to the segment identifier list. Therefore, even if the network controller has no permission to acquire the topology information in the first network domain, the network controller can still calculate a routing path across the first network domain and can establish a segment identifier list including the first segment identifier information in the process of calculating the routing path, so that the message can be forwarded along the routing path across the first network domain according to the segment identifier list.

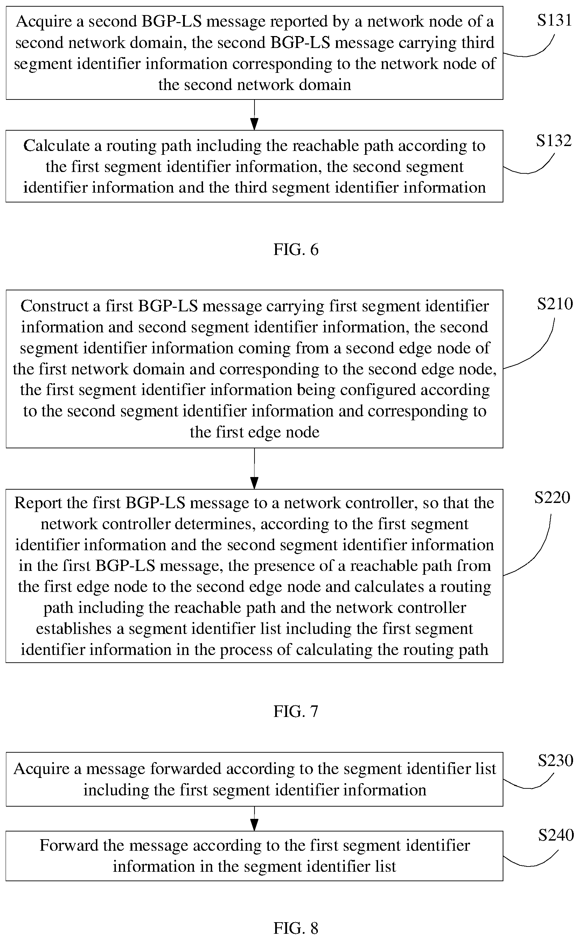

In addition, in an embodiment, with reference to FIG. 6, the computing a routing path including the reachable path in step S130 includes, without limitation, steps S131 to S132.

At S131, a second BGP-LS message reported by a network node of a second network domain is acquired, where the second BGP-LS message carries third segment identifier information corresponding to the network node of the second network domain.

At S132, a routing path including the reachable path is calculated according to the first segment identifier information, the second segment identifier information and the third segment identifier information.

In an embodiment, the network controller also acquires a second BGP-LS message reported by a network node of a second network domain. Since the second BGP-LS message carries third segment identifier information corresponding to the network node of the second network domain, the network controller can calculate a routing path across the first network domain from the second network domain including the reachable path according to the first segment identifier information, the second segment identifier information and the third segment identifier information.

In an embodiment, the first network domain and the second network domain are different network domains. For example, when the first network domain is an SRv6 domain, the second network domain is an MPLS domain. When the first network domain is an MPLS domain, the second network domain is an SRv6 domain. It is to be noted that, when the second network domain is an MPLS domain, the third segment identifier information is an MPLS label. When the second network domain is an SRv6 domain, the third segment identifier information is an SRv6 segment identifier.

In an embodiment, the network node of the second network domain is an intermediate node of the second network domain or an edge node of the second network domain, and there is no limitation thereto. When the network node of the second network domain is an intermediate node of the second network domain, the third segment identifier information carried in the second BGP-LS message is a segment identifier corresponding to the intermediate node. When the network node of the second network domain is an edge node of the second network domain, a BGP adjacency will be established between the edge node of the second network domain and the first edge node of the first network domain, so the third segment identifier information carried in the second BGP-LS message includes a segment identifier corresponding to the edge node and a link segment identifier corresponding to the BGP adjacency. The link segment identifier corresponds to an adjacency link between the edge node of the second network domain and the first edge node of the first network domain.

In addition, in an embodiment, the information processing method further includes, without limitation, issuing the segment identifier list including the first segment identifier information to the first edge node, so that the first edge node forwards messages according to the segment identifier list including the first segment identifier information.

In an embodiment, after the network controller establishes a segment identifier list including the first segment identifier information in the process of calculating the routing path, the network controller can issue the segment identifier list including the first segment identifier information to the first edge node of the first network domain, so that the first edge node can construct a message including the first segment identifier information according to the segment identifier list. Therefore, when the first edge node forwards a message according to the segment identifier list including the first segment identifier information, the message can be forwarded along the routing path across the first network domain according to the segment identifier list including the first segment identifier information. Therefore, even if the network controller has no permission to acquire the topology information in the first network domain, the network controller can still establish a segment identifier list that enables the message to be forwarded across the first network domain, thereby satisfying the cross-domain service forwarding requirements brought by the incremental deployment of the SRv6 network in the network.

In addition, in an embodiment, the information processing method further includes, without limitation, issuing the segment identifier list including the first segment identifier information to the network node of the second network domain, so that the network node of the second network domain forwards messages according to the segment identifier list including the first segment identifier information.

In an embodiment, after the network controller establishes a segment identifier list including the first segment identifier information in the process of calculating the routing path, the network controller can issue the segment identifier list including the first segment identifier information to the network node of the second network domain, so that the network node of the second network domain can construct a message including the first segment identifier information according to the segment identifier list. Therefore, when the network node of the second network domain forwards a message according to the segment identifier list including the first segment identifier information, the message can be forwarded along the routing path across the first network domain from the second network domain according to the segment identifier list including the first segment identifier information. Therefore, even if the network controller has no permission to acquire the topology information in the first network domain, the network controller can still establish a segment identifier list that enables the message to be forwarded across the first network domain from the second network domain, thereby satisfying the cross-domain service forwarding requirements brought by the incremental deployment of the SRv6 network in the network.

In addition, another embodiment of the present disclosure further provides an information processing method. FIG. 7 is a flowchart of the information processing method according to another embodiment of the present disclosure. As shown in FIG. 7, the information processing method is applied to a first edge node of a first network domain. The information processing method includes, without limitation, steps S210 to S220.

At S210, a first BGP-LS message carrying first segment identifier information and second segment identifier information is constructed, where the second segment identifier information comes from a second edge node of the first network domain and corresponds to the second edge node, and the first segment identifier information is configured according to the second segment identifier information and corresponds to the first edge node.

At S220, the first BGP-LS message is reported to a network controller, so that the network controller determines, according to the first segment identifier information and the second segment identifier information in the first BGP-LS message, the presence of a reachable path from the first edge node to the second edge node and calculates a routing path including the reachable path and the network controller establishes a segment identifier list including the first segment identifier information in the process of calculating the routing path.

In an embodiment, after the first edge node acquires the second segment identifier information that comes from the second edge node of the first network domain and corresponds to the second edge node, the first edge node can firstly configure corresponding first segment identifier information for the second segment identifier information (that is, a mapping relationship presents between the first segment identifier information and the second segment identifier information). Then, the first edge node constructs a first BGP-LS message carrying the first segment identifier information and the second segment identifier information, and reports the first BGP-LS message to the network controller. After the network controller acquires the first segment identifier information and the second segment identifier information according to the first BGP-LS message, since a mapping relationship presents between the first segment identifier information and the second segment identifier information, the network controller can take the first network domain as a black box network whose entry node information and exit node information can be learned but the specific internal topology structure cannot be learned, and can determine, according to the first segment identifier information and the second segment identifier information, the presence of a reachable path across the first network domain from the first edge node to the second edge node. Thus, the network control can calculate a routing path including the reachable path. Therefore, even if the network controller has no permission to acquire the topology information in the first network domain, the network controller can still calculate a routing path across the first network domain. In addition, the network controller will establish a segment identifier list including the first segment identifier information in the process of calculating the routing path. Therefore, after the first edge node receives the segment identifier list including the first segment identifier information issued by the network controller in a subsequent step, the first edge node can forward a message according to the segment identifier list so that the message can be forwarded along the routing path across the first network domain.

In an embodiment, the first network domain is an MPLS domain or an SRv6 domain, and there is no limitation thereto. When the first network domain is an MPLS domain, the first segment identifier information is an SRv6 segment identifier, and the second segment identifier information is an MPLS label. When the first network domain is an SRv6 domain, the first segment identifier information is an MPLS label, and the second segment identifier information is an SRv6 segment identifier.

In an embodiment, the first edge node adds a sub-TLV in the first BGP-LS message to allow the first BGP-LS message to carry the first segment identifier information and the second segment identifier information. For example, when the first network domain is an MPLS domain, an MPLS Cross Connect Incoming SRv6 SID sub-TLV may be added in the Local MPLS Cross Connect TLV of the existing BGP-LS message structure to carry the first segment identifier information (SRv6 segment identifier). The Local MPLS Cross Connect TLV expands the carrying through an NLRI (network layer reachability information) field in the BGP-LS message structure, and the second segment identifier information (MPLS label) is carried in the Local MPLS Cross Connect TLV. For another example, when the first network domain is an SRv6 domain, an MPLS Cross Connect Outgoing SRv6 SID sub-TLV may be added in the Local MPLS Cross Connect TLV of the existing BGP-LS message structure. The Local MPLS Cross Connect TLV expands the carrying through an NLRI field in the BGP-LS message structure, and the Incoming Label field in the Local MPLS Cross Connect TLV carries the first segment identifier information (MPLS label), and the MPLS Cross Connect Outgoing SRv6 SID sub-TLV carries the second segment identifier information (SRv6 segment identifier).

It is to be noted that, in the embodiment, when the first network domain is an MPLS domain, the MPLS Cross Connect Incoming SRv6 SID sub-TLV added in the Local MPLS Cross Connect TLV have the same structure and meaning as the MPLS Cross Connect Incoming SRv6 SID sub-TLV in the embodiment shown in FIG. 4. The structure and meaning of the MPLS Cross Connect Incoming SRv6 SID sub-TLV in this embodiment can refer to the relevant description of the MPLS Cross Connect Incoming SRv6 SID sub-TLV in the embodiment shown in FIG. 4, and will not be repeated herein. In addition, in the embodiment, when the first network domain is an SRv6 domain, the MPLS Cross Connect Outgoing SRv6 SID sub-TLV added in the Local MPLS Cross Connect TLV have the same structure and meaning as the MPLS Cross Connect Outgoing SRv6 SID sub-TLV in the embodiment shown in FIG. 5. The structure and meaning of the MPLS Cross Connect Outgoing SRv6 SID sub-TLV in this embodiment can refer to the relevant description of the MPLS Cross Connect Outgoing SRv6 SID sub-TLV in the embodiment shown in FIG. 5, and will not be repeated herein.

In addition, in an embodiment, the first BGP-LS message further carries FEC information. The FEC information is used to indicate related information of an exit node of the reachable path from the first edge node to the second edge node in the first network domain. In this case, the network controller can determine, according to the first segment identifier information, the second segment identifier information and the FEC information in the first BGP-LS message, the presence of a reachable path from the first edge node to the second edge node and calculates a routing path including the reachable path, and the network controller can establish a segment identifier list including the first segment identifier information in the process of calculating the routing path.

In an embodiment, the FEC information is the loopback routing information of the exit node of the MPLS LSP or the global IPv6 routing information of the exit node of the SRv6 domain. The network controller can complete a path puzzle during the calculation of the end-to-end cross-domain path by utilizing the FEC information. For example, in a case where the network controller cannot acquire the topology information in the first network domain and take the first network domain as a black box network, when the network controller needs to calculate an end-to-end routing path across the first network domain, since the first BGP-LS reported to the network controller by the first edge node carries the first segment identifier information, the second segment identifier information and the FEC information, the network controller can learn the presence of a reachable path (e.g., an MPLS LSP or SRv6 forwarding path) from the first edge node to the second edge node in the first network domain through the first segment identifier information, the second segment identifier information and the FEC information. The specific information of the second edge node is indicated by the FEC information. Therefore, when an end-to-end routing path across the first network domain needs to be calculated, the network controller can establish a segment identifier list including the first segment identifier information, and it is considered that the first segment identifier information in the segment identifier list corresponds to a one-hop reachable path from the first edge node to the second edge node. Thus, the message can be passed through along the one-hop reachable path in the black box network (i.e., the first network domain) according to the segment identifier list. Therefore, even if the network controller has no permission to acquire the topology information in the first network domain, the network controller can still calculate a routing path across the first network domain and can establish a segment identifier list including the first segment identifier information in the process of calculating the routing path, so that the message can be forwarded along the routing path across the first network domain according to the segment identifier list.

In addition, in an embodiment, with reference to FIG. 8, the information processing method further includes, without limitation, steps S230 to S240.

At S230, a message forwarded according to the segment identifier list including the first segment identifier information is acquired.

At S240, the message is forwarded according to the first segment identifier information in the segment identifier list.

In an embodiment, after the network controller establishes a segment identifier list including the first segment identifier information in the process of calculating the routing path, the network controller issues the segment identifier list including the first segment identifier information to a network node of a second network domain, so that the network node of the second network domain can construct a message according to the segment identifier list and forward the message. When the first edge node of the first network domain acquires the message forwarded by the network node of the second network domain according to the segment identifier list, the first edge node will forward the message according to the first segment identifier information in the segment identifier list, so that the message can be forwarded along the routing path across the first network domain from the second network domain according to the segment identifier list including the first segment identifier information. Therefore, even if the network controller has no permission to acquire the topology information in the first network domain, the network controller can still establish and issue a segment identifier list that enables the message to be forwarded across the first network domain from the second network domain, thereby satisfying the cross-domain service forwarding requirements brought by the incremental deployment of the SRv6 network in the network.

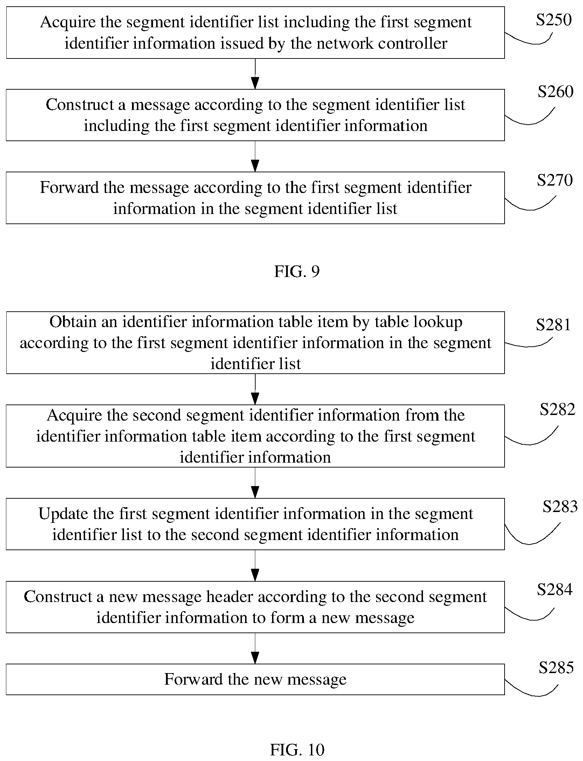

In addition, in an embodiment, with reference to FIG. 9, the information processing method further includes, without limitation, steps S250 to S270.

At S250, the segment identifier list including the first segment identifier information issued by the network controller is acquired.

At S260, a message is constructed according to the segment identifier list including the first segment identifier information.

At S270, the message is forwarded according to the first segment identifier information in the segment identifier list.

In an embodiment, after the network controller establishes a segment identifier list including the first segment identifier information in the process of calculating the routing path, the network controller issues the segment identifier list including the first segment identifier information to the first edge node of the first network domain, so that the first edge node of the first network domain can construct a message according to the segment identifier list and forward the message, and the message can be forwarded along the routing path across the first network domain according to the segment identifier list including the first segment identifier information. Therefore, even if the network controller has no permission to acquire the topology information in the first network domain, the network controller can still establish and issue a segment identifier list that enables the message to be forwarded across the first network domain, thereby satisfying the cross-domain service forwarding requirements brought by the incremental deployment of the SRv6 network in the network.

It is to be noted that, in the embodiment shown in FIG. 8, when the first edge node is a node of the MPLS domain, the message received by the first edge node is an IPv6 message, and the first segment identifier information is an SRv6 segment identifier. In the embodiment shown in FIG. 9, when the first edge node is a node of the MPLS domain, the message constructed and forwarded by the first edge node is an IPv6 message, and the first segment information is an SRv6 segment identifier. No matter in the embodiment shown in FIG. 8 or the embodiment shown in FIG. 9, when the first edge node forwards a message according to the first segment identifier information in the segment identifier list, the first edge node can switch the first segment identifier information into the second segment identifier information (MPLS label) and additionally encapsulates, in an outer layer of the message, an intermediate segment identifier list corresponding to the second segment identifier information, so that the message forms an MPLS label message, and the MPLS label message can be passed through along the reachable path in the first network domain. In addition, in the embodiment shown in FIG. 8, when the first edge node is a node of the SRv6 domain, the message received by the first edge node is an MPLS label message, and the first segment identifier information is an MPLS segment identifier. In the embodiment shown in FIG. 9, when the first edge node is a node of the SRv6 domain, the message constructed and forwarded by the first edge node is an MPLS label message, and the first segment identifier information is an MPLS segment identifier. No matter in the embodiment shown in FIG. 8 or the embodiment shown in FIG. 9, when the first edge node forwards a message according to the first segment identifier information in the segment identifier list, the first edge node can switch the first segment identifier information into the second segment identifier information (SRv6 segment identifier) and additionally encapsulate, in an outer layer of the message, an intermediate segment identifier list corresponding to the second segment identifier information, so that the message forms an IPv6 message, and the IPv6 message can be passed through along the reachable path in the first network domain.

In addition, in an embodiment, with reference to FIG. 10, the step S240 in the embodiment shown in FIG. 8 or the step S270 in the embodiment shown in FIG. 9 includes, without limitation, steps S281 to S285.

At S281, an identifier information table item is obtained by table lookup according to the first segment identifier information in the segment identifier list.

At S282, the second segment identifier information is acquired from the identifier information table item according to the first segment identifier information.

At S283, the first segment identifier information in the segment identifier list is updated to the second segment identifier information.

At S284, a new message header is constructed according to the second segment identifier information to form a new message.

At S285, the new message is forwarded.

In an embodiment, when the first edge node forwards a message according to the first segment identifier information in the segment identifier list, the first edge node obtains an identifier information table item pre-created in the first edge node by table lookup according to the first segment identifier information in the segment identifier list. The identifier information table item represents the mapping relationship between the first segment identifier information and the second segment identifier information. At this time, the first edge node can acquire, from the identifier information table item, the second segment identifier information corresponding to the first segment identifier information according to the first segment identifier information. Then, the first edge node replaces the first segment identifier information in the segment identifier list with the second segment identifier information. At this time, the first edge node constructs a new message header according to the second segment identifier information in the segment identifier list to form a new message. Then, the first edge node will forward the new message according to the new message header, so that the new message can be forwarded along the reachable path in the first network domain.

In an embodiment, when the first edge node configures corresponding first segment identifier information for the acquired second segment identifier information, the first edge node will correspondingly create an identifier information table item. According to the network domain to which the first edge node belongs, the identifier information table pre-created in the first edge node may be implemented differently. For example, when the first edge node is a node of the MPLS domain, the identifier information table item is a local segment identifier table item. The local segment identifier table item contains the first segment identifier information (SRv6 segment identifier) and the second segment identifier information (MPLS label) corresponding to the first segment identifier information. For another example, when the first edge node is a node of the SRv6 domain, the identifier information table item is an incoming label map (ILM) table item, and the forwarding information contained in the ILM table item prompts to switch the first segment identifier information (MPLS label) into the second segment identifier information (SRv6 segment identifier) corresponding to the first segment identifier information and forward it to the second edge node along the shortest path. The ILM table item reflects a reachable path across the first network domain from the first edge node to the second edge node.

In an embodiment, according to the network domain to which the first edge node belongs, the new message header constructed according to the second segment identifier information by the first edge node may be implemented differently. For example, when the first edge node is a node of the MPLS domain, the new message header is an MPLS label stack. The first edge node forms an MPLS label stack to the second segment identifier information according to the second segment identifier information (MPLS label) and the MPLS labels advertised by other nodes in the first network domain. At this time, a new message that can be forwarded in the first network domain can be formed by encapsulating the MPLS label stack in an outer layer of the message. For another example, when the first edge node is a node of the SRv6 domain, the new message header is an SRv6 segment identifier list formed by the IPv6 address list. The first edge node will form an SRv6 segment identifier list to the second segment identifier information according to the second segment identifier information (SRv6 segment identifier) and the SRv6 segment identifiers advertised by other nodes in the first network domain. At this time, a new message that can be forwarded in the first network domain can be formed by encapsulating the SRv6 segment identifier list in the outer layer of the message.

The information processing method provided in the above embodiments will be described in detail below by way of examples.

### Example I

As shown in FIG. 1, the second network domain 120 and the third network domain 130 are SRv6 domains, and the first network domain 110 is an MPLS domain. The second network domain 120 includes a first node 121 and a second node 122 connected successively. The first network domain 110 includes a third node 111, a fourth node 112 and a fifth node 113 connected successively. The third network domain 130 includes a sixth node 131 and a seventh node 132 connected successively. The second node 122 and the third node 111 are BGP peers. The fifth node 113 and the sixth node 131 are BGP peers. The network controller 100 is connected to the first node 121, the second node 122, the third node 111, the fifth node 113, the sixth node 131 and the seventh node 132, respectively.

The network controller 100 needs to calculate an end-to-end segment routing traffic engineering (SR-TE) path from the first node 121 to the seventh node 132. The SR-TE path successively passes through the second network domain 120, the first network domain 110 and the third network domain 130. The third node 111 and the fifth node 113 have the ability to support SRv6.

A link segment identifier END.X SID (122-111) used for indicating the adjacency between the second node 122 and the third node 111 is stored in the second node 122, and a link segment identifier END.X SID (113-131) used for indicating the adjacency between the fifth node 113 and the sixth node 131 is stored in the sixth node 131. The third node 111 creates, in the first network domain 110, a BGP labeled unicast LSP (BGP LU LSP) to the fifth node 113, and configures a piece of first segment identifier information sid-100 for the BGP LU LSP according to the locally configured policy.

The third node 111 reports, to the network controller 100, local MPLS cross connect information corresponding to the BGP LU LSP. The local MPLS cross connect information is marked with XC (from 111 to 113). The local MPLS cross connect information includes the first segment identifier information sid-100, a second segment identifier information label-100 corresponding to the fifth node 113, an outgoing interface, FEC information corresponding to the fifth node 113 and other information. Therefore, the network controller 100 can sense, according to the local MPLS cross connect information, the presence of a one-hop reachable path from the third node 111 to the fifth node 113 in the first network domain 110, so the network controller 100 can calculate an end-to-end SR-TE path as <122, 122-111, XC (from 111 to 113), 113-131, 132>, and translate the SR-TE path into an SRv6 segment identifier list, which is <END SID (122), END.X SID (122-111), sid-100, END.X SID (113-131), END SID (132)>. Then, the network controller 100 issues the SRv6 segment identifier list to the first node 121 to allow the first node 121 to forward an IPv6 message according to the SRv6 segment identifier list.

In the first node 121, when the IPv6 message is forwarded along the SRv6 segment identifier list, the first node 121 encapsulates an IPv6 header and a segment routing header for the IPv6 message, where the segment routing header contains the SRv6 segment identifier list. The specific forwarding process of the IPv6 message will be described below.

The first node 121 forwards the IPv6 message to the second node 122 along the shortest path according to a first segment identifier END SID (122) in the SRv6 segment identifier list.

The second node 122 explicitly forwards the IPv6 message to the third node 111 along an inter-domain link according to a second segment identifier END.X SID (122-111) in the SRv6 segment identifier list.

The third node 111 hits the corresponding local segment identifier table item in the third node 111 according to a third segment identifier sid-100 (i.e., the first segment identifier information) in the SRv6 segment identifier list, switches the first segment identifier information sid-100 into the second segment identifier information label-100, obtains a corresponding MPLS label stack to the fifth node 113 according to the second segment identifier information label-100, and encapsulates the MPLS label stack in an outer layer of the IPv6 message to allow the IPv6 message to form an MPLS label message. Thus, the MPLS label message is passed through all the way to the fifth node 113 in the first network domain 110 in a conventional MPLS forwarding manner.

In the fifth node 113, the MPLS labels in the outer layer of the MPLS label message will be all popped up to expose the IPv6 header in an inner layer. At this time, the MPLS label message is restored as the IPv6 message, and the IPv6 message is explicitly forwarded to the sixth node 131 along the inter-domain link according to a fourth segment identifier END.X SID (113-131) in the SRv6 segment identifier list.

The sixth node 131 forwards the IPv6 message to the seventh node 132 along the shortest path according to a fifth segment identifier END SID (132) in the SRv6 segment identifier list.

### Example II

As shown in FIG. 2, the second network domain 120 and the third network domain 130 are SR-MPLS domains, and the first network domain 110 is an SRv6 domain. The second network domain 120 includes a first node 121 and a second node 122 connected successively. The first network domain 110 includes a third node 111, a fourth node 112 and a fifth node 113 connected successively. The third network domain 130 includes a sixth node 131 and a seventh node 132 connected successively. The second node 122 and the third node 111 are BGP peers. The fifth node 113 and the sixth node 131 are BGP peers. The network controller 100 is connected to the first node 121, the second node 122, the third node 111, the fifth node 113, the sixth node 131 and the seventh node 132, respectively.

The network controller 100 needs to calculate an end-to-end SR-TE path from the first node 121 to the seventh node 132, and the SR-TE path successively passes through the second network domain 120, the first network domain 110 and the third network domain 130. The third node 111 and the fifth node 113 have the ability to support SR-MPLS and SRv6.

A link segment identifier Adjacency-SID (122-111) used for indicating the adjacency between the second node 122 and the third node 111 is stored in the second node 122. A link segment identifier Adjacency-SID (113-131) used for indicating the adjacency between the fifth node 113 and the sixth node 131 is stored in the sixth node 131. The third node 111 receives a node segment identifier END SID (113) (i.e., the second segment identifier information) of the fifth node 113 advertised by the fifth node 113 through an interior gateway protocol (IGP). The third node 111 configures a piece of first segment identifier information lable-200 for the node segment identifier END SID (113) of the fifth node 113 according to the locally configured policy and creates a corresponding ILM table item. The forwarding information contained in the ILM table item prompts to switch the first segment identifier information label-200 into the second segment identifier information END SID (113) and forward it to the fifth node 113 along the shortest path. It is to be noted that the third node can also configure a local policy to directly allocate an additional piece of first segment identifier information (MPLS label) for the node segment identifier of the fifth node 113.

The third node 111 reports, to the network controller 100, local MPLS cross connect information corresponding to the ILM table item. The local MPLS cross connect information is marked with XC (from 111 to 113). The local MPLS cross connect information includes the first segment identifier information label-200, the second segment identifier information END SID (113), an outgoing interface, FEC information corresponding to the fifth node 113 and other information. Therefore, the network controller 100 can sense, according to the local MPLS cross connect information, the presence of a one-hop reachable path from the third node 111 to the fifth node 113 in the first network domain 110, so the network controller 100 can calculate an end-to-end SR-TE path as <122, 122-111, XC (from 111 to 113), 113-131, 132>, and translate the SR-TE path into an SR-MPLS segment identifier list, which is <Node-SID (122), Adjacency-SID (122-111), label-200, Adjacency-SID (113-131), Node-SID (132)>. Then, the network controller 100 issues the SR-MPLS segment identifier list to the first node 121 to allow the first node 121 to forward an MPLS label message according to the SR-MPLS segment identifier list.

In the first node 121, when the MPLS label message is forwarded along the SR-MPLS segment identifier list, the first node 121 encapsulates an MPLS label stack in an outer layer of the MPLS label message, where the MPLS label stack contains the SR-MPLS segment identifier list. The specific forwarding process of the MPLS label message will be described below.

The first node 121 forwards the MPLS label message to the second node 122 along the shortest path according to a first segment identifier Node-SID (122) in the SR-MPLS segment identifier list.

The second node 122 explicitly forwards the MPLS label message to the third node 111 along an inter-domain link according to a second segment identifier Adjacency-SID (122-111) in the SR-MPLS segment identifier list.

The third node 111 hits a corresponding ILM table item in the third node 111 according to the third segment identifier label-200 (i.e., the first segment identifier information) in the SR-MPLS segment identifier list, switches the first segment identifier information label-200 into the second segment identifier information END SID (113), obtains a corresponding SRv6 segment identifier list to the fifth node 113 according to the second segment identifier information END SID (113), and encapsulates an IPv6 header in an outer layer of the MPLS label message to allow the MPLS label message to form an IPv6 message. Thus, the IPv6 message is passed through all the way to the fifth node 113 in the first network domain 110 in a conventional IPv6 message forwarding manner.

In the fifth node 113, the IPv6 header in the outer layer of the IPv6 message will be removed to expose the MPLS label message in an inner layer. At this time, the IPv6 message is restored as the MPLS label message, and the MPLS label message is explicitly forwarded to the sixth node 131 along the inter-domain link according to a fourth segment identifier Adjacency-SID (113-131) in the SR-MPLS segment identifier list.

The sixth node 131 forwards the MPLS label message to the seventh node 132 along the shortest path according to a fifth segment identifier Node-SID (132) in the SR-MPLS segment identifier list.

In addition, an embodiment of the present disclosure further provides a network controller. The network controller includes: a memory, a processor and computer programs that are stored on the memory and executable by the processor.

The processor and the memory may be connected via a bus or in other ways.

As a non-temporary computer-readable storage medium, the memory can be configured to store non-temporary software programs and non-temporary computer-executable programs. In addition, the memory may include high-speed random access memories, or may include non-temporary memories, such as at least one disk memory device, flash memory devices or other non-temporary solid-state memory devices. In some implementations, the memory may optionally include memories remotely arranged relative to the processor. These remote memories may be connected to the processor via a network. Examples of the network include, but not limited to, Internet, Intranet, local area networks, mobile communication networks and combinations thereof.

It is to be noted that the network controller in this embodiment can be applied to the network controller in the embodiment shown in FIG. 1 or FIG. 2. The network controller in this embodiment can constitute a part of the network topology in the embodiment shown in FIG. 1 or FIG. 2. All these embodiments belong to the same inventive concept, and therefore have the same implementation principles and technical effects, which will not be described in detail here.

The non-temporary software programs and instructions required to implement the information processing method in the above embodiments are stored in the memory. The programs and instructions, when executed by the processor, cause the processor to carry out the information processing method in the above embodiments, for example, executing the steps S110 to S130 in the method of FIG. 3 and the steps S131 to S132 in the method of FIG. 6.

In addition, an embodiment of the present disclosure further provides a node. The node includes: a memory, a processor and computer programs that are stored on the memory and executable by the processor.

The processor and the memory may be connected via a bus or in other ways.

As a non-temporary computer-readable storage medium, the memory can be configured to store non-temporary software programs and non-temporary computer-executable programs. In addition, the memory may include high-speed random access memories, or may include non-temporary memories, such as at least one disk memory device, flash memory devices or other non-temporary solid-state memory devices. In some implementations, the memory may optionally include memories remotely arranged relative to the processor. These remote memories may be connected to the processor via a network. Examples of the network include, but not limited to, Internet, Intranet, local area networks, mobile communication networks and combinations thereof.

It is to be noted that the node in this embodiment can be applied to the first edge node in the embodiment shown in FIG. 1 or FIG. 2. The node in this embodiment can constitute a part of the network topology in the embodiment shown in FIG. 1 or FIG. 2. These embodiments belong to the same inventive concept, and therefore have the same implementation principles and technical effects, which will not be described in detail here.

The non-temporary software programs and instructions required to implement the information processing method in the above embodiments are stored in the memory. The programs and instructions, when executed by the processor, cause the processor to carry out the information processing method in the above embodiments, for example, executing the steps S210 to S220 in the method of FIG. 7, the steps S230 to S240 in the method of FIG. 8, the steps S250 to S270 in the method of FIG. 9 and the steps S281 to S285 in the method of FIG. 10.

The apparatus embodiments described above are merely illustrative. The units described as separate components may be or may not be physically separated from each other, that is, they may be located in one place or may be distributed on a plurality of network units. Some or all of modules may be selected according to actual needs to achieve the purpose of the schemes of the embodiments.

In addition, an embodiment of the present disclosure further provides a computer-readable storage medium having computer-executable instructions thereon. The computer-executable instructions, when executed by a processor or controller, for example, the processor in the above network controller embodiment, cause the processor to carry out the information processing method in the above embodiments, for example, executing the steps S110 to S130 in the method of FIG. 3 and the steps S131 to S132 in the method of FIG. 6. For another example, The computer-executable instructions, when executed by a processor in the above node embodiment, cause the processor to carry out the information processing method in the above embodiments, for example, executing the steps S210 to S220 in the method of FIG. 7, the steps S230 to S240 in the method of FIG. 8, the steps S250 to S270 in the method of FIG. 9 and the steps S281 to S285 in the method of FIG. 10.

The embodiments of the present disclosure include the following steps: acquiring a first BGP-LS message reported by a first edge node of a first network domain, where the first BGP-LS message carries second segment identifier information and first segment identifier information configured according to the second segment identifier information, the first segment identifier information corresponds to the first edge node, and the second segment identifier information corresponds to a second edge node of the first network domain; determining, according to the first segment identifier information and the second segment identifier information, a reachable path from the first edge node to the second edge node; and, calculating a routing path including the reachable path, and establishing a segment identifier list including the first segment identifier information in the process of calculating the routing path. In accordance with the schemes provided in the embodiments of the present disclosure, after a network controller acquires the first segment identifier information and the second segment identifier information reported through the first BGP-LS message by the first edge node of the first network domain, since the first segment identifier information corresponds to the first edge node, the second segment identifier information corresponds to the second edge node of the first network domain and the first segment identifier information is configured according to the second segment identifier information, the network controller can determine, according to the first segment identifier information and second segment identifier information, the presence of a reachable path across the first network domain from the first edge node to the second edge node and can thus calculate a routing path including the reachable path. Therefore, even if the network controller has no permission to acquire the topology information in the first network domain, the network controller can still calculate a routing path across the first network domain.

It should be understood by a person having ordinary skill in the art that, all or some of the steps in the methods described above and the systems described above may be implemented as software, firmware, hardware and proper combinations thereof. Some or all of the physical components may be implemented as software executed by processors such as central processors, digital signal processors or microprocessors, or implemented as hardware, or implemented as integrated circuits such as application-specific integrated circuits. Such software may be distributed on a computer-readable medium, and the computer-readable medium may include computer storage mediums (or non-temporary mediums) and communication mediums (or temporary mediums). As well-known to a person having ordinary skills in the art, the term computer storage medium includes volatile or non-volatile and removable or non-removable mediums implemented in any method or technology used to store information (such as computer-readable instructions, data structures, program modules or other data). The computer storage medium includes, but not limited to, RAMs, ROMs, EEPROMs, flash memories or other memory technologies, CD-ROMs, digital video disks (DVDs) or other optical disk storages, magnetic cassettes, magnetic tapes, magnetic disk storages or other magnetic storage devices, or any other mediums which can be used to store desired information and can be accessed by computers. In addition, as well-known to a person having ordinary skills in the art, the communication medium generally contains computer-readable instructions, data structures, program modules or other data in modulation data signals such as carriers or other transmission mechanisms, and may include any information transfer medium.

Although some implementations of the present disclosure have been described above, the present disclosure is not limited thereto. Those having ordinary skills in the art may make various equivalent variations or replacements without departing from the scope defined by the appended claims of the present disclosure.

## Claims

1. An information processing method, applicable to a network controller, the information processing method comprising:
acquiring a first Border Gateway Protocol Link State, BGP-LS, message reported by a first edge node of a first network domain, the first BGP-LS message carrying second segment identifier information and first segment identifier information pre-configured according to the second segment identifier information, the first segment identifier information corresponding to the first edge node, and the second segment identifier information corresponding to a second edge node of the first network domain (S110); wherein, the first segment identifier information pre-configured for the second segment identifier information is by means of a mapping relationship between the first segment identifier information and the second segment identifier information;
determining, according to the first segment identifier information and the second segment identifier information, the presence of a reachable path from the first edge node to the second edge node (S120); and
calculating a routing path including the reachable path, and establishing a segment identifier list including the first segment identifier information in the process of calculating the routing path (S130);
**characterized in that**, the first BGP-LS message further carries Forwarding Equivalence Class, FEC, information; and, the determining, according to the first segment identifier information and the second segment identifier information, the presence of a reachable path from the first edge node to the second edge node comprises:
determining, according to the first segment identifier information, the second segment identifier information and the FEC information, the presence of a reachable path from the first edge node to the second edge node;
wherein, the FEC, information comprises loopback routing information of an exit node of MPLS label switching path or global IPv6 routing information of another exit node of SRv6 domain.

2. The information processing method of claim 1, wherein the calculating a routing path including the reachable path comprises:
acquiring a second BGP-LS message reported by a network node of a second network domain, the second BGP-LS message carrying third segment identifier information corresponding to the network node (S131); and
calculating a routing path including the reachable path according to the first segment identifier information, the second segment identifier information and the third segment identifier information (S132).

3. The information processing method of claim 1, further comprising:
issuing the segment identifier list including the first segment identifier information to the first edge node, so that the first edge node forwards messages according to the segment identifier list including the first segment identifier information.

4. The information processing method of claim 2, further comprising:
issuing the segment identifier list including the first segment identifier information to the network node, so that the network node forwards messages according to the segment identifier list including the first segment identifier information.

5. An information processing method, applicable to a first edge node of a first network domain, the information processing method comprising:
constructing a first BGP-LS message carrying first segment identifier information and second segment identifier information, the second segment identifier information coming from a second edge node of the first network domain and corresponding to the second edge node, the first segment identifier information being pre-configured according to the second segment identifier information and corresponding to the first edge node (S210); wherein, the first segment identifier information pre-configured for the second segment identifier information is by means of a mapping relationship between the first segment identifier information and the second segment identifier information; and
reporting the first BGP-LS message to a network controller, so that the network controller determines, according to the first segment identifier information and the second segment identifier information in the first BGP-LS message, the presence of a reachable path from the first edge node to the second edge node and calculates a routing path including the reachable path, and that the network controller establishes a segment identifier list including the first segment identifier information in the process of calculating the routing path (S220);
**characterized in that**, the first BGP-LS message further carries FEC information, and the first BGP-LS message allows the network controller to determine, according to the first segment identifier information, the second segment identifier information and the FEC information in the first BGP-LS message, the presence of a reachable path from the first edge node to the second edge node and calculate a routing path including the reachable path, and to establish a segment identifier list including the first segment identifier information in the process of calculating the routing path;
wherein, the FEC, information comprises loopback routing information of an exit node of MPLS label switching path or global IPv6 routing information of another exit node of SRv6 domain.

6. The information processing method of claim 5, further comprising:
acquiring a message forwarded according to the segment identifier list (S230), and forwarding the message according to the first segment identifier information in the segment identifier list (S240);
or,
acquiring the segment identifier list including the first segment identifier information issued by the network controller (S250), constructing a message according to the segment identifier list including the first segment identifier information (S260), and forwarding the message according to the first segment identifier information in the segment identifier list (S270).

7. The information processing method of claim 6, wherein the forwarding the message according to the first segment identifier information in the segment identifier list comprises:
obtaining an identifier information table item by table lookup according to the first segment identifier information in the segment identifier list (S281);
acquiring the second segment identifier information from the identifier information table item according to the first segment identifier information (S282);
updating the first segment identifier information in the segment identifier list to the second segment identifier information (S283);
constructing a new message header according to the second segment identifier information to form a new message (S284); and
forwarding the new message (S285).

8. A network controller, comprising: a memory, a processor and computer programs that are stored on the memory and executable by the processor, wherein the computer programs, when executed by the processor, cause the network controller to carry out the information processing method of any one of claims 1 to 4.

9. An edge node, comprising: a memory, a processor and computer programs that are stored on the memory and executable by the processor, wherein the computer programs, when executed by the processor, cause the edge node to carry out the information processing method of any one of claims 5 to 7.

10. A computer-readable storage medium having computer-executable instructions stored thereon which, when executed by a processor, cause the processor associated with a network controller to carry out the information processing method of any one of claims 1 to 4 or when executed by a processor associated with an edge node, cause the edge node to carry out the information processing method of any one of claims 5 to 7.

## Patentansprüche

1. Informationsverarbeitungsverfahren, das auf eine Netzsteuerung anwendbar ist, das Informationsverarbeitungsverfahren umfassend:
Erfassen einer ersten Nachricht über Border Gateway Protocol Link State, BGP-LS, die von einem ersten Randknoten einer ersten Netzdomäne gemeldet wird, wobei die erste BGP-LS-Nachricht zweite Segmentkennungsinformationen und erste Segmentkennungsinformationen trägt, die gemäß den zweiten Segmentkennungsinformationen vorkonfiguriert sind, wobei die ersten Segmentkennungsinformationen dem ersten Randknoten entsprechen, und die zweite Segmentkennungsinformationen einem zweiten Randknoten der ersten Netzdomäne (S110) entsprechen; wobei die ersten Segmentkennungsinformationen für die zweiten Segmentkennungsinformationen mittels einer Abbildungsbeziehung zwischen den ersten Segmentkennungsinformationen und den zweiten Segmentkennungsinformationen vorkonfiguriert sind;
Bestimmen, gemäß den ersten Segmentkennungsinformationen und den zweiten Segmentkennungsinformationen, des Vorhandenseins eines erreichbaren Pfads von dem ersten Randknoten zu dem zweiten Randknoten (S120); und
Berechnen eines Routingpfads einschließlich des erreichbaren Pfads und Erstellen einer Segmentkennungsliste einschließlich der ersten Segmentkennungsinformationen in dem Prozess eines Berechnens des Routingpfads (S130);
**dadurch gekennzeichnet, dass** die erste BGP-LS-Nachricht ferner Informationen über Weiterleitungs-Äquivalenzklasse, FEC, trägt; und das Bestimmen, gemäß den ersten Segmentkennungsinformationen und den zweiten Segmentkennungsinformationen, des Vorhandenseins eines erreichbaren Pfads von dem ersten Randknoten zu dem zweiten Randknoten Folgendes umfasst:
Bestimmen, gemäß den ersten Segmentkennungsinformationen, den zweiten Segmentkennungsinformationen und den FEC-Informationen, des Vorhandenseins eines erreichbaren Pfads von dem ersten Randknoten zu dem zweiten Randknoten;
wobei die FEC-Informationen Loopback-Routinginformationen eines Ausgangsknotens von MPLS-Label-Switching-Pfad oder globale 1Pv6-Routinginformationen eines anderen Ausgangsknotens der SRv6-Domäne umfassen.

2. Informationsverarbeitungsverfahren nach Anspruch 1, wobei das Berechnen eines Routingpfads einschließlich des erreichbaren Pfads Folgendes umfasst:
Erfassen einer zweiten BGP-LS-Nachricht, die von einem Netzknoten einer zweiten Netzdomäne gemeldet wird, wobei die zweite BGP-LS-Nachricht dritte Segmentkennungsinformationen trägt, die dem Netzknoten entsprechen (S131); und
Berechnen eines Routingpfads einschließlich des erreichbaren Pfads gemäß den ersten Segmentkennungsinformationen, den zweiten Segmentkennungsinformationen und den dritten Segmentkennungsinformationen (S132).

3. Informationsverarbeitungsverfahren nach Anspruch 1, ferner umfassend:
Ausgeben der Segmentkennungsliste einschließlich der ersten Segmentkennungsinformationen an den ersten Randknoten, sodass der erste Randknoten Nachrichten gemäß der Segmentkennungsliste einschließlich den ersten Segmentkennungsinformationen weiterleitet.

4. Informationsverarbeitungsverfahren nach Anspruch 2, ferner umfassend:
Ausgeben der Segmentkennungsliste einschließlich der ersten Segmentkennungsinformationen an den Netzknoten, sodass der Netzknoten Nachrichten gemäß der Segmentkennungsliste einschließlich den ersten Segmentkennungsinformationen weiterleitet.

5. Informationsverarbeitungsverfahren, das auf einen ersten Randknoten einer ersten Netzdomäne anwendbar ist, das Informationsverarbeitungsverfahren umfassend:
Erstellen einer ersten BGP-LS-Nachricht, die erste Segmentkennungsinformationen und zweite Segmentkennungsinformationen trägt, wobei die zweiten Segmentkennungsinformationen von einem zweiten Randknoten der ersten Netzdomäne kommen und dem zweiten Randknoten entsprechen, wobei die ersten Segmentkennungsinformationen gemäß den zweiten Segmentkennungsinformationen vorkonfiguriert sind und dem ersten Randknoten entsprechen (S210); wobei die ersten Segmentkennungsinformationen für die zweiten Segmentkennungsinformationen mittels einer Abbildungsbeziehung zwischen den ersten Segmentkennungsinformationen und den zweiten Segmentkennungsinformationen vorkonfiguriert sind; und
Melden der ersten BGP-LS-Nachricht an eine Netzsteuerung, sodass die Netzsteuerung gemäß den ersten Segmentkennungsinformationen und den zweiten Segmentkennungsinformationen in der ersten BGP-LS-Nachricht das Vorhandensein eines erreichbaren Pfads von dem ersten Randknoten zu dem zweiten Randknoten bestimmt und einen Routingpfad einschließlich des erreichbaren Pfads berechnet, und sodass die Netzsteuerung eine Segmentkennungsliste einschließlich der ersten Segmentkennungsinformationen in dem Prozess eines Berechnens des Routingpfads erstellt (S220);
**dadurch gekennzeichnet, dass** die erste BGP-LS-Nachricht ferner FEC-Informationen trägt und die erste BGP-LS-Nachricht es dem Netzsteuerung ermöglicht, gemäß den ersten Segmentkennungsinformationen, den zweiten Segmentkennungsinformationen und den FEC-Informationen in der ersten BGP-LS-Nachricht das Vorhandensein eines erreichbaren Pfads von dem ersten Randknoten zu dem zweiten Randknoten zu bestimmen und einen Routingpfad zu berechnen, der den erreichbaren Pfad beinhaltet, und eine Segmentkennungsliste zu erstellen, die die ersten Segmentkennungsinformationen in dem Prozess eines Berechnens des Routingpfads beinhaltet;
wobei die FEC-Informationen Loopback-Routinginformationen eines Ausgangsknotens von MPLS-Label-Switching-Pfad oder globale 1Pv6-Routinginformationen eines anderen Ausgangsknotens der SRv6-Domäne umfassen.

6. Informationsverarbeitungsverfahren nach Anspruch 5, ferner umfassend:
Erfassen einer Nachricht, die gemäß der Segmentkennungsliste weitergeleitet wird (S230) und Weiterleiten der Nachricht gemäß den ersten Segmentkennungsinformationen in der Segmentkennungsliste (S240);
oder
Erfassen der Segmentkennungsliste einschließlich der ersten Segmentkennungsinformationen, die von der Netzsteuerung (S250) ausgegeben werden, Aufbauen einer Nachricht gemäß der Segmentkennungsliste, die die ersten Segmentkennungsinformationen (S260) beinhaltet, und Weiterleiten der Nachricht gemäß den ersten Segmentkennungsinformationen in der Segmentkennungsliste (S270).

7. Informationsverarbeitungsverfahren nach Anspruch 6, wobei das Weiterleiten der Nachricht gemäß den ersten Segmentkennungsinformationen in der Segmentkennungsliste Folgendes umfasst:
Erlangen eines Kennungsinformation-Tabellenelements durch Nachschlagen in der Tabelle gemäß den ersten Segmentkennungsinformationen in der Segmentkennungsliste (S281);
Erfassen der zweiten Segmentkennungsinformationen anhand des Kennungsinformation-Tabellenelements gemäß den ersten Segmentkennungsinformationen (S282);
Aktualisieren der ersten Segmentkennungsinformationen in der Segmentkennungsliste auf die zweiten Segmentkennungsinformationen (S283);
Aufbauen eines neuen Nachrichtenkopfs gemäß den zweiten Segmentkennungsinformationen, um eine neue Nachricht zu bilden (S284); und
Weiterleiten der neuen Nachricht (S285).

8. Netzsteuerung, umfassend: einen Speicher, einen Prozessor und Computerprogramme, die in dem Speicher gespeichert und von dem Prozessor ausführbar sind, wobei die Computerprogramme, wenn sie von dem Prozessor ausgeführt werden, die Netzsteuerung veranlassen, das Informationsverarbeitungsverfahren nach einem der Ansprüche 1 bis 4 durchzuführen.

9. Randknoten, umfassend: einen Speicher, einen Prozessor und Computerprogramme, die in dem Speicher gespeichert und von dem Prozessor ausführbar sind, wobei die Computerprogramme, wenn sie von dem Prozessor ausgeführt werden, den Randknoten veranlassen, das Informationsverarbeitungsverfahren nach einem der Ansprüche 5 bis 7 durchzuführen.

10. Computerlesbares Speichermedium, auf dem computerausführbare Anweisungen gespeichert sind, die, wenn sie von einem Prozessor ausgeführt werden, den mit einer Netzsteuerung assoziierten Prozessor veranlassen, das Informationsverarbeitungsverfahren nach einem der Ansprüche 1 bis 4 durchzuführen, oder, wenn sie von einem mit einem Randknoten assoziierten Prozessor ausgeführt werden, den Randknoten veranlassen, das Informationsverarbeitungsverfahren nach einem der Ansprüche 5 bis 7 durchzuführen.

## Revendications

1. Procédé de traitement d'informations, applicable à un contrôleur réseau, le procédé de traitement d'informations comprenant :
l'acquisition d'un premier message de Protocole de passerelle frontière à état de liaison, (Border Gateway Protocol Link State) BGP-LS, signalé par un premier nœud marginal d'un premier domaine réseau, le premier message BGP-LS contenant des informations relatives au deuxième identifiant de segment et des informations relatives au premier identifiant de segment préconfigurées en fonction des informations relatives au deuxième identifiant de segment, les informations relatives au premier identifiant de segment correspondant au premier nœud marginal, et les informations relatives au deuxième identifiant de segment correspondant à un deuxième nœud marginal du premier domaine réseau (S110) ; dans lequel les informations relatives au premier identifiant de segment sont préconfigurées pour les informations relatives au deuxième identifiant de segment au moyen d'une relation de mise en correspondance entre les informations relatives au premier identifiant de segment et les informations relatives au deuxième identifiant de segment ;
la détermination, en fonction des informations relatives au premier identifiant de segment et des informations relatives au deuxième identifiant de segment, de la présence d'une voie d'acheminement entre le premier nœud marginal et le deuxième nœud marginal (S120) ; et
le calcul d'un chemin de routage comprenant la voie d'acheminement, et l'établissement d'une liste d'identifiants de segments comprenant les informations relatives au premier identifiant de segment au cours du processus de calcul du chemin de routage (S130) ;
**caractérisé en ce que** le premier message BGP-LS contient en outre des informations FEC (Forwarding Equivalence Class), Classe d'équivalence pour la transmission ; et **en ce que** la détermination, en fonction des informations relatives au premier identifiant de segment et des informations relatives au deuxième identifiant de segment, de la présence d'une voie d'acheminement entre le premier nœud marginal et le deuxième nœud marginal comprend :
la détermination, en fonction des informations relatives au premier identifiant de segment, des informations relatives au deuxième identifiant de segment et des informations FEC, de la présence d'une voie d'acheminement entre le premier nœud marginal et le deuxième nœud marginal ;
dans lequel les informations FEC comprennent des informations de routage de bouclage d'un nœud de sortie du chemin de commutation d'étiquettes MPLS ou des informations de routage IPv6 global d'un autre nœud de sortie du domaine SRv6.

2. Procédé de traitement d'informations selon la revendication 1, dans lequel le calcul d'un chemin de routage comprenant la voie d'acheminement atteignable comprend :
l'acquisition d'un deuxième message BGP-LS signalé par un nœud de réseau d'un deuxième domaine réseau, le deuxième message BGP-LS contenant des informations relatives au troisième identifiant de segment correspondant au nœud de réseau (S131) ; et
le calcul d'un chemin de routage comprenant la voie d'acheminement en fonction des informations relatives au premier identifiant de segment, au deuxième identifiant de segment et au troisième identifiant de segment (S132).

3. Procédé de traitement d'informations selon la revendication 1, comprenant en outre :
l'émission de la liste d'identifiants de segments comprenant les informations relatives au premier identifiant de segment au premier nœud marginal, de sorte que le premier nœud marginal transmet les messages conformément à la liste d'identifiants de segments comprenant les informations relatives au premier identifiant de segment.

4. Procédé de traitement d'informations selon la revendication 2, comprenant en outre :
l'émission de la liste d'identifiants de segments comprenant les informations relatives au premier identifiant de segment au nœud de réseau, de sorte que le nœud de réseau transmet les messages conformément à la liste d'identifiants de segments comprenant les informations relatives au premier identifiant de segment.

5. Procédé de traitement d'informations, applicable à un premier nœud marginal d'un premier domaine réseau, le procédé de traitement d'informations comprenant :
la construction d'un premier message BGP-LS contenant des informations relatives au premier identifiant de segment et des informations relatives au deuxième identifiant de segment, les informations relatives au deuxième identifiant de segment provenant d'un deuxième nœud marginal du premier domaine réseau et correspondant au deuxième nœud marginal, les informations relatives au premier identifiant de segment étant préconfigurées en fonction des informations relatives au deuxième identifiant de segment et correspondant au premier nœud marginal (S210) ; dans lequel les informations relatives au premier identifiant de segment préconfigurées pour les informations relatives au deuxième identifiant de segment le sont au moyen d'une relation de mise en correspondance entre les informations relatives au premier identifiant de segment et les informations relatives au deuxième identifiant de segment ; et
la communication du premier message BGP-LS à un contrôleur réseau, de sorte que le contrôleur réseau détermine, en fonction des informations relatives au premier identifiant de segment et des informations relatives au deuxième identifiant de segment contenues dans le premier message BGP-LS, la présence d'une voie d'acheminement entre le premier nœud marginal et le deuxième nœud marginal et calcule un chemin de routage comprenant la voie d'acheminement, et que le contrôleur réseau établisse une liste d'identifiants de segment comprenant les informations relatives au premier identifiant de segment dans le processus de calcul du chemin de routage (S220) ;
**caractérisé en ce que**, le premier message BGP-LS contient en outre des informations FEC, et le premier message BGP-LS autorise le contrôleur réseau à déterminer, en fonction des informations relatives au premier identifiant de segment, aux informations relatives au deuxième identifiant de segment et des informations FEC contenues dans le premier message BGP-LS, la présence d'une voie d'acheminement du premier nœud marginal au deuxième nœud marginal et de calculer un chemin de routage comprenant la voie d'acheminement, et d'établir une liste d'identifiants de segment comprenant les informations relatives au premier identifiant de segment dans le processus de calcul du chemin de routage ;
dans lequel les informations FEC comprennent des informations de routage de bouclage d'un nœud de sortie du chemin de commutation d'étiquettes MPLS ou des informations de routage IPv6 global d'un autre nœud de sortie du domaine SRv6.

6. Procédé de traitement d'informations selon la revendication 5, comprenant en outre :
l'acquisition d'un message transmis en fonction de la liste d'identifiants de segments (S230), et la transmission du message en fonction des informations relatives au premier identifiant de segment dans la liste d'identifiants de segments (S240) ;
ou,
l'acquisition de la liste d'identifiants de segments comprenant les informations relatives au premier identifiant de segment émises par le contrôleur réseau (S250), la construction d'un message en fonction de la liste d'identifiants de segments comprenant les informations relatives au premier identifiant de segment (S260), et l'acheminement du message en fonction des informations relatives au premier identifiant de segment dans la liste d'identifiants de segments (S270).

7. Procédé de traitement d'informations selon la revendication 6, dans lequel l'acheminement du message en fonction des informations relatives au premier identifiant de segment dans la liste d'identifiants de segments comprend :
l'obtention d'un élément du tableau d'informations relatives aux identifiants par consultation de tableau en fonction des informations relatives au premier identifiant de segment dans la liste d'identifiants de segment (S281) ;
l'acquisition de l'information relative au deuxième identifiant de segment à partir de l'élément du tableau d'informations relatives aux identifiants en fonction des information relatives au premier identifiant de segment (S282) ;
la mise à jour des information relatives au premier identifiant de segment dans la liste d'identifiants de segments par les informations relatives au deuxième identifiant de segment (S283) ;
la construction d'un nouvel en-tête de message en fonction des informations relatives au deuxième identifiant de segment pour former un nouveau message (S284) ; et
l'acheminement du nouveau message (S285).

8. Contrôleur réseau comprenant : une mémoire, un processeur et des programmes informatiques stockés dans la mémoire et exécutables par le processeur, dans lequel les programmes informatiques, lorsqu'ils sont exécutés par le processeur, amènent ce dernier à mettre en œuvre le procédé de traitement d'informations selon l'une des revendications 1 à 4.

9. Nœud marginal comprenant : une mémoire, un processeur et des programmes informatiques stockés dans la mémoire et exécutables par le processeur, dans lequel les programmes informatiques, lorsqu'ils sont exécutés par le processeur, amènent le nœud marginal à mettre en œuvre le procédé de traitement d'informations selon l'une des revendications 5 à 7.

10. Support de stockage lisible par ordinateur sur lequel sont stockées des instructions exécutables par ordinateur qui, lorsqu'elles sont exécutées par un processeur, amènent le processeur associé à un contrôleur réseau à exécuter la méthode de traitement d'informations selon l'une des revendications 1 à 4 ou, lorsqu'elles sont exécutées par un processeur associé à un nœud marginal, amènent ce dernier à exécuter le procédé de traitement d'informations selon l'une des revendications 5 à 7.
